(19) Europäisches Patentamt / European Patent Office / Office européen des brevets

(11) **EP 2 010 862 B1**

(12) **EUROPÄISCHE PATENTSCHRIFT**

(45) Veröffentlichungstag und Bekanntmachung des Hinweises auf die Patenterteilung:
**02.01.2013 Patentblatt 2013/01**

(21) Anmeldenummer: **07724288.1**

(22) Anmeldetag: **17.04.2007**

(51) Int Cl.:
***G01B 11/24*** *(2006.01)*      ***G02B 21/00*** *(2006.01)*

(86) Internationale Anmeldenummer:
**PCT/EP2007/003350**

(87) Internationale Veröffentlichungsnummer:
**WO 2007/124858 (08.11.2007 Gazette 2007/45)**

(54) **MIKROSKOP UND MIKROSKOPIERVERFAHREN ZUR MESSUNG DES OBERFLÄCHENPROFILS EINES OBJEKTS**

MICROSCOPE AND MICROSCOPE MICROEXAMINATION PROCEDURE METHOD FOR THE MEASUREMENT OF THE SURFACE PROFILE OF AN OBJECT

MICROSCOPE ET PROCÉDÉ D'EXAMEN AU MICROSCOPE POUR MESURER LE PROFIL DE SURFACE D'UN OBJET

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **26.04.2006   DE 102006019384**

(43) Veröffentlichungstag der Anmeldung:
**07.01.2009   Patentblatt 2009/02**

(73) Patentinhaber: **Carl Zeiss Microscopy GmbH
07745 Jena (DE)**

(72) Erfinder: **WINTEROT, Johannes
07745 Jena (DE)**

(74) Vertreter: **Hampe, Holger
Carl Zeiss Jena GmbH,
Zentralbereich Recht und Patente,
Patentabteilung
Carl-Zeiss-Promenade 10
07745 Jena (DE)**

(56) Entgegenhaltungen:
**WO-A-95/00871          DE-A1- 19 612 846
DE-A1- 19 713 362       FR-A1- 2 826 461
US-B1- 6 188 514**

- **QUERCIOLI F ET AL: "OPTICAL SURFACE PROFILE TRANSDUCER" OPTICAL ENGINEERING, SOC. OF PHOTO-OPTICAL INSTRUMENTATION ENGINEERS. BELLINGHAM, US, Bd. 27, Nr. 2, 1. Februar 1988 (1988-02-01), Seiten 135-142, XP000611036 ISSN: 0091-3286**

**Beschreibung**

Die Erfindung betrifft ein Mikroskop sowie ein Mikroskopierverfahren zur Messung des Oberflächenprofils eines Objekts. Die Messung des Oberflächenprofils kann man herkömmlicherweise z.B. mit einem Laser-Scanning-Mikroskop dadurch durchführen, daß eine Folge konfokaler Schnitte (sogenannte z-Stapel) durchgeführt und ausgewertet werden. Die Geschwindigkeit der Bildaufnahme und der Anzahl der z-Schnitte bestimmt die erfaßbare Dynamik der Topologie.

Aus der DE 44 19 940 A1 ist es bekannt, in einem konfokalen Lichtmikroskop eine Objektivlinse mit starker chromatischer Aberration zu verwenden und das konfokal detekierte Licht spektral zu zerlegen und auszuwerten, so daß verschiedene Tiefen des Objekts gleichzeitig erfaßt werden können. Nachteilig ist es hierbei, daß eine spezielle Objektivlinse vorgesehen werden muß und nicht die Standardobjektivlinsen eingesetzt werden können.

Ausgehend hiervon ist es Aufgabe der Erfindung, ein Mikroskop zur Messung des Oberflächenprofils eines Objekts zur Verfügung zu stellen, das einfach und kostengünstig realisiert werden und das das Oberflächenprofil schnell erfassen kann. Ferner soll ein entsprechendes Mikroskopierverfahren bereitgestellt werden.

Erfindungsgemäß wird die Aufgabe gelöst durch ein Laser- Scanning-Mikroskop gemäß Anspruch 1 und einem scannenden Mi8kroskopierverfahren gemäß Anspruch 14. Bevorzugte Weiterbildungen sind Gegenstand der abhängigen Ansprüche.

Bei dem erfindungsgemäßen Mikroskop wird einerseits der Vorteil erreicht, daß mittels der Änderung des Farblängsfehlers eine Anpassung an die Topologie des Objekts leicht und schnell möglich ist. Andererseits ist das Farbmodul zwischen dem Scanner und der Ebene angeordnet, so daß das Farbmodul zu einem Laser-Scanning-Mikroskop hinzugefügt wird kann, um zu dem erfindungsgemäßen Mikroskop zu gelangen. Insbesondere ist es nicht notwendig, die Objektivlinse des Mikroskops zu ändern oder durch eine speziell angefertigte und mit einem Farblängsfehler versehene Objektivlinse zu ersetzen.

Bei dem Mikroskop kann die Probenstrahlung als divergierendes oder paralleles Strahlenbündel auf das Farbmodul treffen und wird von dem Farbmodul dann in ein paralleles bzw. konvergierendes Strahlenbündel umgewandelt.

Ferner kann das Farbmodul zumindest eine Linse sowie einen gekrümmten Spiegel aufweisen, der den Detektionsstrahlengang so faltet, daß die Probenstrahlung die Linse zweimal durchläuft. Damit wird ein aus sehr wenigen Elementen aufgebautes Farbmodul zur Verfügung gestellt, das den gewünschten Farblängsfehler aufweist. Insbesondere können die Linse und der gekrümmte Spiegel eine erste Farboptik bilden und kann das Farbmodul noch eine zweite austauschbare Farboptik aufweisen, die einen anderen Farblängsfehler aufweist als die erste Farboptik. Die zweite austauschbare Farboptik kann insbesondere auch als Linse mit gekrümmtem Spiegel ausgebildet sein.

Der Spiegel kann als Rückflächenspiegel auf einer Seite der Linse ausgebildet sein. Damit wird ein äußerst kompaktes Bauelement bereitgestellt und es wird vorteilhaft eine Verschmutzung des Spiegels vermieden.

Das Farbmodul kann die Linse als einzige Linse und den Spiegel als einzigen Spiegel aufweisen. Insbesondere können beide Seiten der Linse als sphärische Flächen ausgebildet sein, so daß die Herstellung leicht mit der gewünschten Genauigkeit und kostengünstig durchgeführt werden kann.

Das Farbmodul kann insbesondere so angeordnet sein, daß der Hauptstrahl der Probenstrahlung mit der optischen Achse des Farbmoduls zusammenfällt.

Ferner kann dem Farbmodul im Detektionsstrahlengang ein Umlenkspiegel mit einem Durchgangsloch vorgeordnet sein, wobei die Probenstrahlung als divergierendes Strahlenbündel durch das Durchgangsloch läuft, auf das Farbmodul trifft und vom Farbmodul als Parallelbündel kommend am Umlenkspiegel umgelenkt wird. In diesem Fall können das Farbmodul und der Umlenkspiegel in einem Bereich im Detektionsstrahlengang angeordnet sein, in dem sich die Probenstrahlung als paralleles Strahlenbündel ausbreitet, wobei noch ein Kollimator vorgesehen ist. Umlenkspiegel, Kollimator und Farbmodul können so angeordnet sein, daß das parallele Probenstrahlenbündel vom Umlenkspiegel als Parallelbündel zum Kollimator hin reflektiert wird, der das Probenstrahlenbündel zum Umlenkspiegel als konvergierendes Strahlenbündel so zurückreflektiert, daß es durch das Durchgangsloch des Umlenkspiegels läuft und hinter dem Durchgangsloch sich als divergierendes Strahlenbündel ausbreitet. Dieses divergierende Strahlenbündel trifft dann auf das Farbmodul, das das divergierende Strahlenbündel zurück zum Umlenkspiegel als Parallelbündel reflektiert, das am Umlenkspiegel zum nächsten optischen Element im Detektionsstrahlengang als Parallelbündel umgelenkt wird.

Auch ist es möglich, daß die Probenstrahlung als paralleles Strahlenbündel auf den Umlenkspiegel trifft, von diesem zum Farbmodul hin umgelenkt wird, das Farbmodul durchläuft und vom Farbmodul als konvergierendes Strahlenbündel kommend durch das Durchgangsloch hindurchläuft. Insbesondere in diesem Fall kann der Umlenkspiegel auch gleichzeitig als Konfokalblende eingesetzt werden, was die Kompaktheit des Mikroskops erhöht. Auch in diesem Fall kann noch ein Kollimator angeordnet sein, wobei dann die Anordnung von Farbmodul, Umlenkspiegel und Kollimator so gewählt ist, daß das parallele Probenstrahlenbündel am Umlenkspiegel zum Farbmodul hin reflektiert wird. Das parallele Strahlenbündel wird mittels des Farbmoduls als konvergierendes Strahlenbündel zum Durchgangsloch des Umlenkspiegels zurückreflektiert, wobei das hindurchgetretene konvergierende Probenstrahlenbündel hinter dem Durchgangsloch als divergierendes Strahlenbündel auf den Kollimator trifft, der es zum Umlenkspiegel als paralleles Probenstrahlenbündel zurückreflektiert, wobei der Umlenkspiegel das parallele Probenstrahlenbündel zum nächsten optischen Element im Detektionsstrahlengang hin umlenkt. In den beschriebenen Ausgestaltungen, bei denen jeweils der Kollimator vorgesehen ist, ist der Umlenkspiegel bevorzugt auf beiden Seiten verspiegelt.

Es ist erfindungsgemäss, daß das Farbmodul zwischen dem Scanner und dem Hauptteiler angeordnet ist. In diesem Fall wird das Farbmodul auch von der Beleuchtungsstrahlung zur Beleuchtung durchlaufen, so daß dadurch die unterschiedlichen Wellenlängen auch gleich in die entsprechenden Schnittweiten fokussiert werden. Bei dieser beschriebenen Ausführung ist es bevorzugt, wenn noch der oben in Verbindung mit dem Umlenkspiegel beschriebene Kollimator vorgesehen ist, da das Farbmodul im parallelen Strahlengang zwischen Hauptteiler und Scanner angeordnet ist und somit mit der beschriebenen Anordnung des Kollimators es leicht möglich ist, dem parallelen Strahlenbündel (sowohl die Beleuchtungsstrahlung zur Beleuchtung als auch die Probenstrahlung) jeweils den gewünschten Farblängsfehler aufzuprägen.

Das Farbmodul kann den Spiegel sowie (z.B. genau) zwei oder (z.B. genau) drei Linsen umfassen und die Linsen sowie der Spiegel können entlang der optischen Achse des Farbmoduls verschiebbar sein, so daß der gewünschte Farblängsfehler des Farbmoduls einstellbar ist. Insbesondere ist es dadurch möglich, den Farblängsfehler kontinuierlich zu verändern und kontinuierlich an die gewünschten Objektschnittweitenbereiche anzupassen.

Es können alle Linsen aus dem gleichen Material hergestellt sein, was die Herstellungskosten verringert.

Bei dem erfindungsgemäßen Mikroskop kann das Beleuchtungsmodul eine konfokale Beleuchtung verwirklichen. Es ist jedoch auch möglich, die Objektbeleuchtung mit einer Auflicht-Hellfeld-Beleuchtung oder einer Durchlicht-Hellfeld-Beleuchtung zu verwirklichen. In diesem Fall wird lediglich die Detektion konfokal durchgeführt.

Das Beleuchtungsmodul kann ferner noch die Quelle zur Erzeugung der Beleuchtungsstrahlung mit unterschiedlicher Wellenlänge enthalten. Die Beleuchtungsstrahlung ist bevorzugt Beleuchtungslicht mit Wellenlängen aus dem Bereich von 300 - 700 nm. Natürlich sind auch andere Wellenlängen möglich. Insbesondere handelt es sich bei der Beleuchtungsstrahlung um Laserstrahlung.

Ferner kann das Mikroskop noch eine Steuereinheit aufweisen, die den Betrieb des Mikroskops steuert und insbesondere auch die Detektion.

Zur wellenlängenabhängigen Detektion kann eine spektrale Aufspaltung der konfokal abgebildeten Probenstrahlung durchgeführt werden. Dazu können geeignete dispersive optische Elemente eingesetzt werden, wie z.B. ein Prisma und/oder ein Gitter.

Ferner kann das Mikroskop noch eine Ausgabeeinheit aufweisen, wie z.B. einen Bildschirm, auf dem das gemessene Oberflächenprofil dargestellt wird. Die Darstellung kann mittels einer Falschfarbendarstellung oder auch als dreidimensionale Darstellung durchgeführt werden.

Das Detektionsmodul kann in der Ebene eine Konfokalblende aufweisen, die nur die konfokal abgebildete Probenstrahlung transmittiert oder reflektiert. Insbesondere kann die Konfokalblende als Lochblende ausgebildet sein.

Die Wechselwirkung zwischen der Beleuchtungsstrahlung und dem Objekt kann beispielsweise Reflexion oder Transmission sein. Es ist auch möglich, daß Fluoreszenzstrahlung erzeugt und detektiert wird.

Die Aufgabe wird also gelöst durch ein Mikroskopierverfahren zur Messung des Oberflächenprofils eines Objekts, bei dem Beleuchtungsstrahlung mit unterschiedlichen Wellenlängen so auf verschiedene Oberflächenabschnitte des Objekts gelenkt wird, daß für jeden Abschnitt ein vorbestimmter Objektschnittweitenbereich beleuchtet wird, wobei aufgrund einer Wechselwirkung zwischen der Beleuchtungsstrahlung und dem Objekt Probenstrahlung erzeugt wird, und bei dem zeitlich nacheinander Probenstrahlung jedes Abschnitts detektiert wird, indem die Probenstrahlung mittels eines Scanners in einen Detektionsstrahlengang gelenkt und für jede zu detektierende Schnittweite des Objektschnittweitenbereichs jeweils eine andere Wellenlänge der in den Detektionsstrahlengang gelenkten Probenstrahlung konfokal in eine Ebene abgebildet wird, die Intensität der konfokal abgebildeten Probenstrahlung wellenlängenabhängig detektiert wird und daraus die Lage des entsprechenden Abschnitts des Objekts abgeleitet wird, wobei zwischen dem Scanner und der Ebene ein Farbmodul mit verstellbarem Farblängsfehler angeordnet wird, das von der Probenstrahlung durchlaufen wird, so daß durch Änderung des Farblängsfehlers die zu detektierenden Schnittweiten eingestellt werden.

Mit diesem Verfahren ist es möglich, kostengünstig und schnell das Oberflächenprofil einer Probe zu erfassen.

Die Beleuchtungsstrahlung ist bevorzugt Beleuchtungslicht mit Wellenlängen aus dem Bereich von 300 - 700 nm, wobei jedoch auch andere Wellenlängen möglich sind. Die Beleuchtungsstrahlung kann auch Laserstrahlung sein.

Das Mikroskopierverfahren kann in gleicher Weise wie das erfindungsgemäße Mikroskop weitergebildet werden.

Die Erfindung wird nachfolgend unter Bezugnahme auf die Zeichnung beispielhalber noch näher erläutert. Es zeigen:

Fig. 1    eine schematische Darstellung eines Mikroskops, das nicht gegenstand der Erfindung ist.

Fig. 2    eine vergrößerte Querschnittsdarstellung durch einen Teil des zu messenden Objekts;

Fig. 3    ein Diagramm zur Darstellung des Farblängsfehlers des Farbmoduls 9 von Fig. 1;

Fig. 4    ein Farbmodul 9 gemäß einer zweiten Ausführungsform;

Fig. 5    ein Diagramm, aus dem die einzustellenden Linsen- und Spiegelpositionen für den gewünschten Farblängsfehler entnehmbar sind;

Fig. 6    ein Farbmodul 9 gemäß einer weiteren Ausführungsform;

Fig. 7    ein Diagramm, aus dem die einzustellenden Linsen- und Spiegelpositionen des Farbmoduls von Fig. 6 in Abhängigkeit der gewünschten Farblängsfehlercharakteristik entnehmbar sind; und

Fig. 8    eine schematische Darstellung einer Ausführungsform des erfindungsgemäßen Mikroskops.

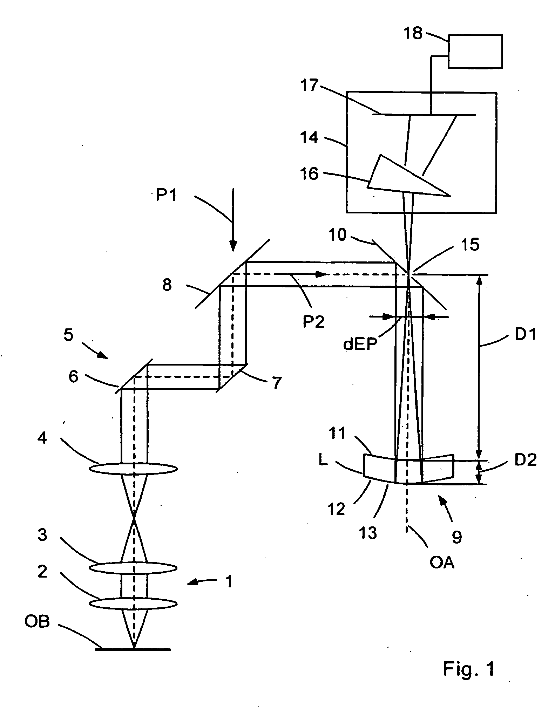

Bei der in Fig. 1 gezeigten Ausführung des Mikroskops zur Messung des Oberflächenprofils eines Objekts OB ist im wesentlichen nur der Detektionsskanal detaillierter dargestellt.

Das Mikroskop ist als Laser-Scanning-Mikroskop ausgebildet und umfaßt zur Detektion eine Mikroskopoptik 1 mit einem Objektiv 2 und einer Tubuslinse 3, eine Scanneroptik 4, eine Ablenkeinheit bzw. Scanner 5 mit zwei Spiegeln 6, 7, einen Hauptteiler 8 sowie einen Umlenkspiegel 10 und ein Farbmodul 9, das eine Einzellinse L enthält.

Die Einzellinse L ist als konkav-konvex Linse L ausgebildet, wobei die konkave Seite 11 dem Umlenkspiegel 10 zugewandt ist und die konvexe Seite 12 verspiegelt ist, so daß die Einzellinse L einen Rückflächenspiegel 13 aufweist.

Ferner ist noch eine Detektionseinheit 14 so angeordnet, das der Umlenkspiegel 10 zwischen der Detektionseinheit 14 und der Einzellinse L liegt.

Im Betrieb wird Laserstrahlung mit unterschiedlicher Wellenlänge über den Hauptteiler 8 (wie durch den Pfeil P1 angedeutet ist) zum Scanner 5 geführt und mittels des Scanners 5 und der Scanneroptik 4 in Verbindung mit der Mikroskopoptik 1 auf bzw. in ein zu untersuchendes Objekt OB fokussiert und über das Objekt bewegt wird. Aufgrund einer Wechselwirkung zwischen der fokussierten Laserstrahlung und dem Objekt OB (z.B. Reflexion an der Objektoberfläche) wird Probenstrahlung erzeugt, die über die Mikroskopoptik 1, die Scanneroptik 4 und den Scanner 5 in den sogenannten descannten Strahlengang hinter dem Scanner 5 gelenkt wird. Die Probenstrahlung wird dann im descannnten Strahlengang (der hier auch Detektionsstrahlengang genannt wird) mittels des Hauptteilers 8 zum Umlenkspiegel 10 hin reflektiert (Pfeil P2) und über den Umlenkspiegel 10 als paralleles Strahlenbündel auf die Einzellinse L gerichtet.

Die Einzellinse L weist einen vorbestimmten Farblängsfehler auf, so daß in Abhängigkeit der Objektschnittweite, aus der die Probenstrahlung stammt, eine andere Wellenlänge konfokal in ein im Umlenkspiegel 10 vorgesehene Durchgangsöffnung 15 fokussiert wird. Der Umlenkspiegel 10 dient hier somit auch gleichzeitig als Konfokalblende für die Detektion.

Dem Umlenkspiegel 10 ist die Detektionseinheit 14 nachgeordnet, die die Intensität der konfokal abgebildeten Probenstrahlung wellenlängenabhängig detektiert. Dazu kann die Detektionseinheit 14, wie schematisch in Fig. 1 dargestellt ist, ein Prisma 16 zur wellenlängenabhängigen Ablenkung sowie einen dem Prisma 16 nachgeordneten Detektor 17 aufweisen. Die Detektionssignale des Detektors 17 werden einer Steuereinheit 18 zugeleitet, die in Abhängigkeit der Intensität die Lage der Oberfläche des gerade detektierten Abschnitts des Objekts OB ermitteln kann. Dies kann z.B. als Falschfarbenbild einem Benutzer dargeboten werden, bei dem jede dargestellte Farbe einer anderen Höhe entspricht. Es ist jedoch auch eine dreidimensionale Darstellung möglich.

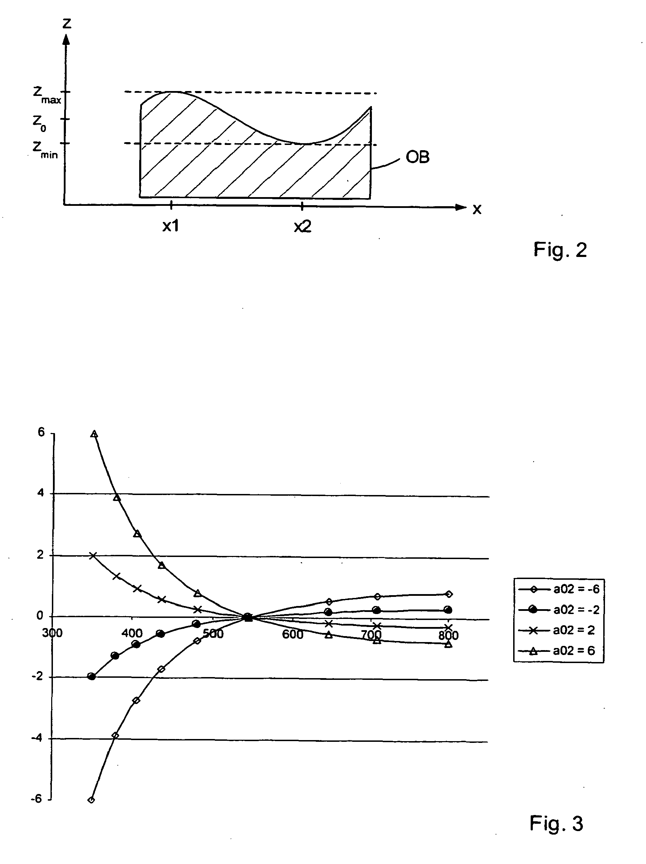

Aufgrund der wellenlängenabhängigen konfokalen Abbildung in die Durchgangsöffnung 15 kann nämlich jeder Wellenlänge eine Objektschnittweite und somit eine Höhe der entsprechenden Probenoberfläche zugeordnet werden. In Fig. 2 ist dazu schematisch ein Schnitt (x-z-Schnitt) durch einen Abschnitt des Objekts OB gezeigt, dessen Oberfläche an einem ersten Punkt x1 und an einem zweiten Punkt x2 mit dem Laser-Scanning-Mikroskop von Fig. 1 gemessen wird. Das Mikroskop ist so eingestellt, daß die Laserstrahlung mit den unterschiedlichen Wellenlängen in einer Höhe $z_0$ fokussiert wird. Natürlich wird dadurch die Probe auch oberhalb und unterhalb dieser Fokushöhe $z_0$ mit der Laserstrahlung beleuchtet, wenn auch mit einer etwas schlechteren Fokussierung in Abhängigkeit der Schärfentiefe der Fokussierung. Es wird somit z.B. der Höhenbereich $z_{min}$ bis $z_{max}$ (also ein vorbestimmter Objektschnittweitenbereich) mit der Laserstrahlung mit unterschiedlicher Wellenlänge beleuchtet (in Fig. 2 durch gestrichelte Linien angedeutet).

Aufgrund des Farblängsfehlers der Einzellinse L werden aus dem Höhenbereich von $z_{min}$ bis $z_{max}$ in Abhän-gigkeit der Höhe und somit in Abhängigkeit der Schnittweite unterschiedliche Wellenlängen konfokal in die Durchgangsöffnung 15 abgebildet, so daß z.B. die konfokal abgebildete rote Wellenlänge $z_{min}$ entspricht und die konfokal abgebildete blaue Wellenlänge $z_{max}$ entspricht. Bei der Detektion am Ort x1 wird die Laserstrahlung mit den unterschiedlichen Wellenlängen am stärksten an der Oberfläche reflektiert, die bei $z_{max}$ liegt, so daß die Intensität der blauen Wellenlänge am Detektor 17 am größten ist. Bei der Detektion des Ortes x2 ist hingegen die Intensität der roten Probenstrahlung am höchsten, da die Oberfläche dort lediglich die Höhe $z_{min}$ aufweist.

Das Farbmodul 9 weist nun nicht nur eine einzige Einzellinse L auf, sondern mehrere austauschbare Einzellinsen L, die sich untereinander lediglich in ihrer Dicke D2, in ihrem Abstand D1 der konkaven Seite 11 zum Umlenkspiegel 10 und den Krümmungsradien der Vorder- und Rückseite 11 und 12 unterscheiden. Durch Austausch der Einzellinsen L können unterschiedliche Farblängsfehlercharakteristika vorgesehen werden, so daß beispielsweise ein größerer oder kleinerer Objektschnittweitenbereich (von $z_{min}$ bis $z_{max}$) bereitgestellt werden kann. Somit weist das Farbmodul 9 einen veränderbaren Farblängsfehler auf, mit dem der detektierbare Objektschnittweitenbereich eingestellt und z.B. schnell an sich ändernde Objekttopologien angepaßt werden kann.

Der Hauptteiler 8, der Scanner 5, die Scanneroptik 4 und die Mikroskopoptik 1 bilden ein Beleuchtungsmodul. Das Beleuchtungsmodul kann auch noch die nicht gezeigte Laserquelle zur Erzeugung der Laserstrahlung enthalten. Die Mikroskopoptik 1, die Scanneroptik 4, der Scanner 5, der Hauptteiler 8, der Umlenkspiegel 10, das Farbmodul 9 und die Detektionseinheit 14 bilden ein Detektionsmodul.

In Fig. 3 ist die Farblängsfehlercharakteristik für vier Varianten des erfindungsgemäßen Farbmoduls 9 dargestellt. Entlang der Abszisse ist die Wellenlänge $\lambda$ in nm und entlang der Ordinate ist der Farblängsfehler $a02(\lambda)$ als Wellenflächendeformation in Teilen von $\lambda$ dargestellt, wobei mit $s(\lambda) = 1{,}1 * \lambda * a02(\lambda)/nA^2$ die physikalische Schnittweite berechenbar ist. $\Delta s = s(\lambda) - s(546\ nm)$ beschreibt eine Schnittweitendifferenz für die Wellenlänge $\lambda$, und nA ist die numerische Apertur, die hier als $\dfrac{1}{2} \cdot \dfrac{dEP}{f}$ definiert ist (dEP ist der Durchmesser der Eintrittspupille, hier dEP = 3,2 mm, und f ist die Brennweite des Kollimators). Der Wert von $a02(\lambda)$ für $\lambda = 350$ nm wird hier einfach als a02 bezeichnet und dient als Parameter zur Unterscheidung von unterschiedlichen Farblängsfehlercharakteristiken des Farbmoduls 9.

Die Linie a02 = -2 zeigt die Farblängsfehlercharakteristik der Einzellinse L von Fig. 1, die mit folgenden Parametern ausgebildet ist:

Krümmungsradius der konkaven Vorderseite 11: 54,13 mm
Krümmungsradius der konvexen Rückseite 12: 42,34 mm
Dicke D2 der Linse: 3,71 mm
Abstand D1 der vorderen Seite 11 von der Punktlichtquelle: 17,14 mm
Materialparameter: $n_e$ = 1,58481, $v_e$ = 40,57
Brennweite f: 20 mm

In Fig. 3 ist noch die Farblängsfehlercharakteristik von Abwandlungen des Farbmoduls 9 von Fig. 1 eingezeichnet, wobei jedoch der grundsätzliche Aufbau als rückflächenverspiegelte Konkav-Konvex-Einzellinse beibehalten wird und auch das gleiche Linsenmaterial eingesetzt wird. Lediglich die Krümmungsradien sowie die Linsendicke und der Abstand D1 sind variiert.

In der nachfolgenden Tabelle sind die entsprechenden Krümmungsradien und Abstände angegeben, wobei die Brennweite f des Kollimators 1 von Fig. 1 sowie die der Abwandlungen gemäß der nachfolgenden Tabelle jeweils 20 mm beträgt.

| Kurve a02 = | Krümmungsradius Vorderseite 2 [mm] | Krümmungsradius Rückseite 3 [mm] | D2 [mm] | D1 [mm] |
|---|---|---|---|---|
| -6 | 177,95 | 56,89 | 3,74 | 17,66 |
| 0 | 40,21 | 42,34 | 3,71 | 17,74 |
| +2 | 31,98 | 39,31 | 4,00 | 17,59 |
| +6 | 22,66 | 34,29 | 4,05 | 17,60 |

Wie der Darstellung in Fig. 3 klar zu entnehmen ist, läßt sich somit die Farblängsfehlercharakteristik von monoton fallend mit zunehmender Wellenlänge (a02=6 oder 2) bis zu monoton steigend mit zunehmender Wellenlänge (a02 = -6 oder - 2) nur durch die Wahl der Krümmungsradien und Abstände, bzw. nur durch Änderung der geometrischen Abmessungen, ohne das Material zu ändern, einstellen. Dadurch kann der gewünschte für den entsprechenden Anwendungsfall (also für den entsprechenden Objektschnittweitenbereich) eingestellt werden. Die Variante a02=0 (unabhängig von der Wellenlänge) ist hier nur der Vollständigkeit halber in obiger Tabelle aufgeführt und kann dann eingesetzt werden, wenn keine wellenlängenabhängige und somit keine gleichzeitige Detektion unterschiedlicher Objektschnittweiten gewünscht ist.

Die Einzellinse L von Fig. 1 sowie die in Fig. 3 gezeigten Abwandlungen genügen alle der folgenden Bedingung:

$$\left|1/R2-(a02*(b2/f^2+b1/f+b0)+c2/f^2+c1/f+c0)\right|<0,0003$$

Dabei steht R2 für den Krümmungsradius der Rückseite 12 und f für die Brennweite der Einzellinse L; und die Konstanten c0, c1, c2, b0, b1, b2 weisen folgende Werte auf:

|  |  |
|---|---|
| b0 = -0,0010395 | c0 = 0,00068469 |
| b1 = -0,003737 | c1 = -0,570058 |
| b2 = 0,0844626 | c2 = 1,679172 |

Aus der obigen Bedingung kann R2 und damit der Krümmungsradius des Spiegels 13 festgelegt werden. Die Einzellinse L kann mit unterschiedlichen Brennweiten ausgelegt werden. Es können Brennweiten eingestellt werden, die die folgende Ungleichung erfüllen: 0,002< 1/f<0,1.

Die obige Bedingung kann aus der numerischen Analyse der designten Einzellinse bzw. des Mikroskops in Abhängigkeit vorgegebener Randbedingungen (z.B. Brennweite der Einzellinse L bzw. des Farbmoduls 9, Linsenmaterial, ...) hergeleitet werden.

Ferner ist es beim erfindungsgemäßen Mikroskop möglich, den Abstand D1 zu ändern. Dies kann insbesondere dadurch durchgeführt werden, daß das Farbmodul 9 entlang der optischen Achse OA bewegt wird. Eine Vergrößerung des Abstandes D1 bewirkt in dem Diagramm von Fig. 3 eine Verschiebung der entsprechenden Kurve entlang der Ordinate hin zu kleineren Werten. Entsprechend führt eine Verkleinerung des Abstands D1 zu einer Verschiebung der Kurve nach oben.

Natürlich ist es auch möglich, den Spiegel 13 als separaten Spiegel auszubilden. Auch kann die Einzellinse L ein Gitter aufweisen, das beispielsweise auf der vorderen Seite 11, der hinteren Seite 12 oder auf der Spiegelfläche 13 ausgebildet ist.

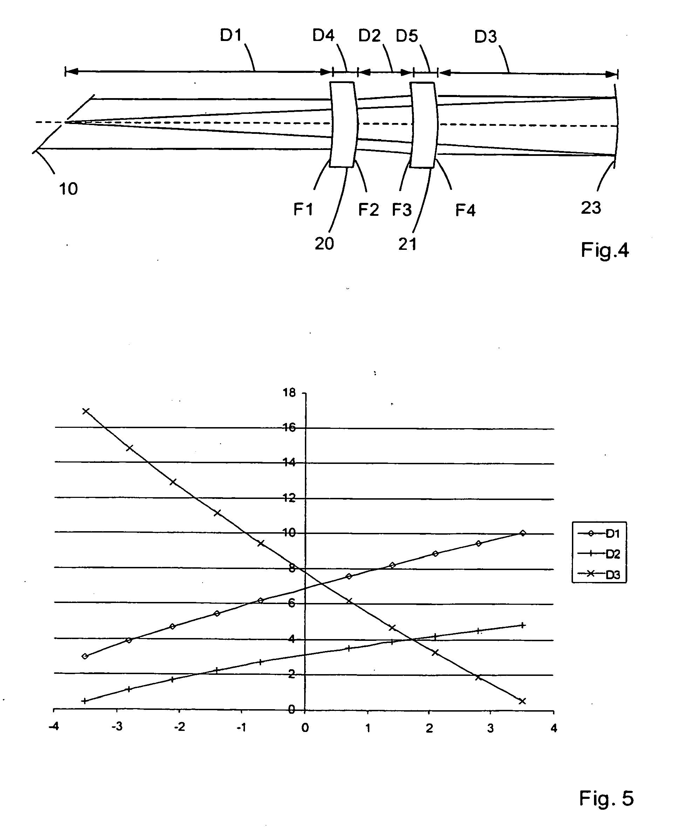

In Fig. 4 ist eine weitere Abwandlung des Farbmoduls 9 gezeigt. Bei dieser Ausführungsform umfaßt das Farbmodul 9 zwei Konkav-Konvex-Linsen 20, 21 sowie einen Konkavspiegel 23. Die Linsen 20 und 21 sowie der Spiegel 23 sind entlang der optischen Achse bewegbar, so daß deren Abstände veränderbar sind. Dadurch läßt sich beispielsweise bei konstanter Brennweite f des Farbmoduls 9 in Fig. 4 der Farblängsfehler von einem minimalen Objektschnittweitenbereich kontinuierlich bis zu maximalen Objektschnittweitenbereich durchstimmen (Farblängsfehler ist am größten bzw. gleicher Wellenlängenunterschied für zu höherem Höhenunterschied im Vergleich zum minimalen Objektschnittweitenbereich).

In der Ausführungsform in Fig. 4 sind die Linsen 20 und 21 aus dem gleichen Material und weisen eine Abbezahl von 36,16 auf. Der Abstand von der Eintrittspupille des Farbmoduls 9 bis zur konkaven Seite der Linse 20 beträgt D1, der Abstand zwischen den beiden einander zugewandten Seiten der Linsen 20 und 21 beträgt D2 und der Abstand von der konvexen Seite der Linse 21 zum Spiegel 23 beträgt D3. Die Dicke der Linsen 20 und 21 beträgt D4 und D5. Die Brennweite f beträgt 20 mm. Für diesen Fall lassen sich die Krümmung des Spiegels 23, die Brechkraft der Linsen 20 und 21 und die Bewegungsdynamik (also die Variation der Abstände D1, D2 und D3) als Funktion der Brennweite des Systems wie folgt beschreiben, wobei durch Wahl von zwei der drei Abstände D1, D2 und D3 die Fokussierung und Einstellung der Brennweite bewirkt wird und mittels der Wahl der Größe des dritten Abstands (hier D3) die Farblängsfehlercharakteristik festgelegt werden kann:

$$\left|1/R+0,4088/f+0,0023\right|<0,001$$

$$\left|f1+0,0669*f+28,788\right|<0,05*f$$

$$\left|f2-0,0271*f-57,22\right|<0,05*f$$

$$\left|D3(\Delta s(=0))-D3(\Delta s(<0))-0,4179*f+1,4475\right|<0,02*f$$

$$\left|D3(\Delta s(>0))-D3(\Delta s(<0))-0,731*f-2,867\right|<0,02*f$$

R ist der Krümmungsradius des Spiegels 23, und f1 sowie f2 sind die Brennweiten der Linsen 20 bzw. 21. $\Delta$s (<0) steht für ein $\Delta$s, dessen Wert kleiner 0 ist. $\Delta$s(=0) steht für ein $\Delta$s, dessen Wert 0 ist, und $\Delta$s(>0) steht für ein $\Delta$s, dessen Wert größer als 0 ist. In dem hier beschriebenen Ausführungsbeispiel wird für $\Delta$s(<0) ein Wert a02 von etwa - 3,5 und für $\Delta$s(>0) ein Wert a02 von etwa +3,5 erreicht.

Die genauen Parameter des Farbmoduls 9 von Fig. 4 sind wie folgt:

Krümmungsradius der konkaven Fläche F1: 13,10
Krümmungsradius der konvexen Fläche F2: 48,39
Krümmungsradius der konkaven Fläche F3: 18,44
Krümmungsradius der konvexen Fläche F4: 12,78
Krümmungsradius des konkaven Spiegels 23: 43,99
D4 = 2,00
D5 = 2,00.

|    | $\Delta$s(<0) | $\Delta$s(=0) | $\Delta$s(>0) |
|----|---------------|---------------|---------------|
| D1 | 14,05         | 6,93          | 3,12          |
| D2 | 4,83          | 3,12          | 0,55          |
| D3 | 0,50          | 7,68          | 16,57         |

In der obigen Tabelle sind spezielle Werte für $\Delta$s angegeben. In Fig. 5 ist die Abhängigkeit der Farblängsfehlercharakteristik von den Abständen D1, D2 und D3 graphisch so dargestellt, daß entlang der Abszisse der Wert für a02 angegeben ist und entlang der Ordinate die Größe des entsprechenden Abstandes in mm angegeben ist. Jedem einzelnen Wert des Parameters a02 sind wiederum Farblängsfehlercharakteristiken zugeordnet, die hier zwar nicht gezeigt sind, aber qualitativ den in Fig. 3 dargestellten entsprechen. Somit kann man in Abhängigkeit der gewünschten Farblängsfehlercharakteristik aus der Darstellung von Fig. 5 dann die einzustellenden Abstände D1-D3 entnehmen. Für die Werte a02 von -3,5, 3,5 und 0 sind die entsprechenden Abstände in der obigen Tabelle angegeben.

Das Farbmodul 9 kann für Brennweiten f ausgelegt werden, die die folgende Ungleichung erfüllen: 0,002<1/f<0,1. Die Abbezahl der Linsen 20 und 21 sind bevorzugt kleiner als 60, vorzugsweise kleiner als 40. Insgesamt weist der Kollimator 1 von Fig. 4 eine Linse 20 negativer Brechkraft und einer niedrigen Abbezahl, eine Linse 21 positiver Brechkraft und ebenfalls niedriger Abbezahl sowie einen Spiegel 23 positiver Brechkraft auf. Durch Einstellen der Abstände D1-D3 kann die gewünschte Farblängsfehlercharakteristik eingestellt und verändert werden, wobei die Brennweite des Gesamtsystems konstant bleibt.

Insbesondere kann das Farbmodul 9 von Fig. 4 noch Stellelemente für die Linsen 20 und 21 und den Spiegel 23 umfassen, so daß die Änderung der Farblängsfehlercharakteristik automatisch durchführbar ist.

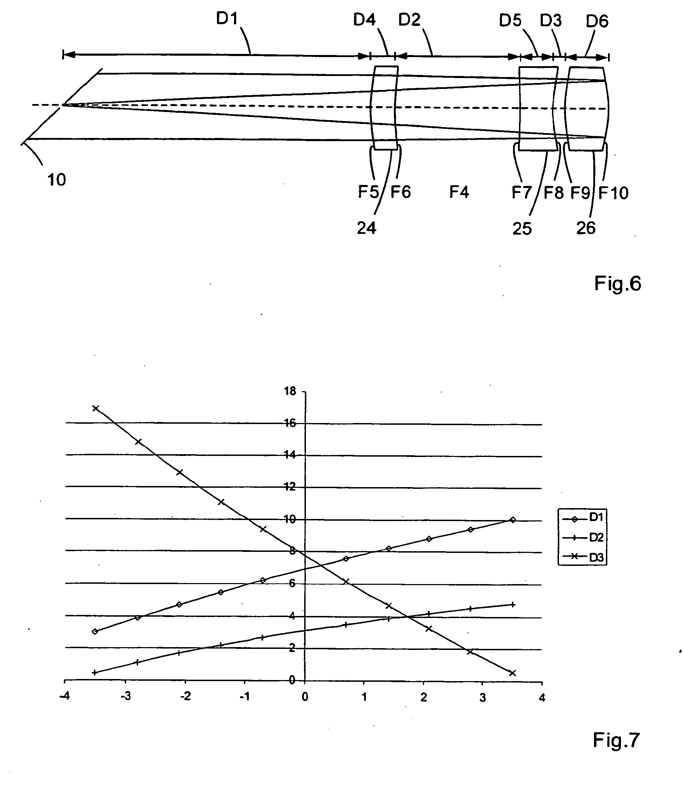

In Fig. 6 ist ein Farbmodul 9 gezeigt, das eine Linse 24 positiver Brechkraft, eine Linse 25 negativer Brechkraft und einer Spiegellinse 26 (Fläche F10 ist verspiegelt) positiver Brechkraft aufweist. Die Linsen weisen jeweils eine niedrige Abbezahl auf, beispielsweise kleiner als 60, vorzugsweise kleiner als 40. In dem hier beschriebenen konkreten Ausführungsbeispiel beträgt die Abbezahl 36,16. Auch das Farbmodul in Fig. 6 ist so ausgelegt, daß bei konstanter Brennweite des Gesamtsystems sich der Farblängsfehler kontinuierlich durchstimmen läßt. Der Abstand der Eintrittspupille bis zur Fläche F5 der Linse 24 beträgt D1, der Abstand der einander zugewandten Flächen F6 und F7 der Linsen 24 und 25 beträgt D2 und der Abstand der Flächen F8 und F9 der Linsen 25 und 26 beträgt D3. Die Linsen 24, 25 und 26 weisen eine Dicke D4, D5 bzw. D6 auf.

Das Farbmodul 9 von Fig. 6 ist so ausgelegt, daß folgende Bedingungen erfüllt sind:

$$|1/R6 + 0,3143/f + 0,0088| < 0,001$$

$$|f1 - 0,1175*f - 45,775| < 0,1*f$$

$$|f2 + 0,0133*f + 14,621| < 0,1*f$$

$$\left|f3 - 0{,}0286 * f - 9{,}6999\right| < 0{,}1 * f$$

$$\left|D2(\Delta s(=0)) - D2(\Delta s(<0)) - 0{,}0004 * f^2 + 0{,}2172 * f - 1{,}6243\right| < 0{,}01 * f$$

$$\left|D2(\Delta s(>0)) - D2(\Delta s(<0)) - 0{,}0011 * f^2 + 0{,}4239 * f - 2{,}7441\right| < 0{,}01 * f$$

Auch in diesem Ausführungsbeispiel wird für $\Delta s(<0)$ ein Wert a02 von etwa -3,5 und für $\Delta s(>0)$ ein Wert a02 von etwa 3,5 erreicht. Die genauen Krümmungen der Linsenflächen sind wie folgt:

Krümmungsradius der konvexen Fläche F5: 71,76 mm,
Krümmungsradius der konkaven Fläche F6: 51,07 mm,
Krümmungsradius der konkaven Fläche F7: 8,90 mm,
Krümmungsradius der konkaven Fläche F8: 254,88 mm,
Krümmungsradius der konvexen Fläche F9: 49,08 mm,
Krümmungsradius der konvexen Fläche F10: 40,94 mm,
D4 = 2,00,
D5 = 5,52 und
D6 = 4,00.

|    | $\Delta s(<0)$ | $\Delta s(=0)$ | $\Delta s(>0)$ |
|----|------|------|-------|
| D1 | 4,50 | 8,91 | 12,95 |
| D2 | 5,51 | 3,10 | 0,61  |
| D3 | 2,22 | 1,51 | 0,88  |

Die Abhängigkeit der Farblängsfehlercharakteristik von den einzelnen Abständen D1-D3 ist in der Graphik von Fig. 7 dargestellt, wobei die Darstellung der von Fig. 5 entspricht. Für einen gewünschten Farblängsfehler a02 kann man anhand der Darstellung von Fig. 7 die Abstände D1-D3 ermitteln.

Von besonderem Vorteil ist bei den beschriebenen Ausführungsformen, daß alle gekrümmten Linsen- bzw. Spiegelflächen als sphärische Flächen ausgebildet werden können.

Die für die Ausführungsformen von Fig. 4 und 6 angegebenen Bedingungen sind für einen Fachmann durch numerische Analysen von Berechnungen der optischen Eigenschaften des jeweiligen Farbmoduls 9 herleitbar.

Bei den bisher beschriebenen Ausführungsformen ist das Farbmodul 9 stets zwischen dem Hauptteiler 8 und der Konfokalebene bzw. Durchgangsöffnung 15 angeordnet und somit nur im Detektionskanal des Laser-Scanning-Mikroskops.

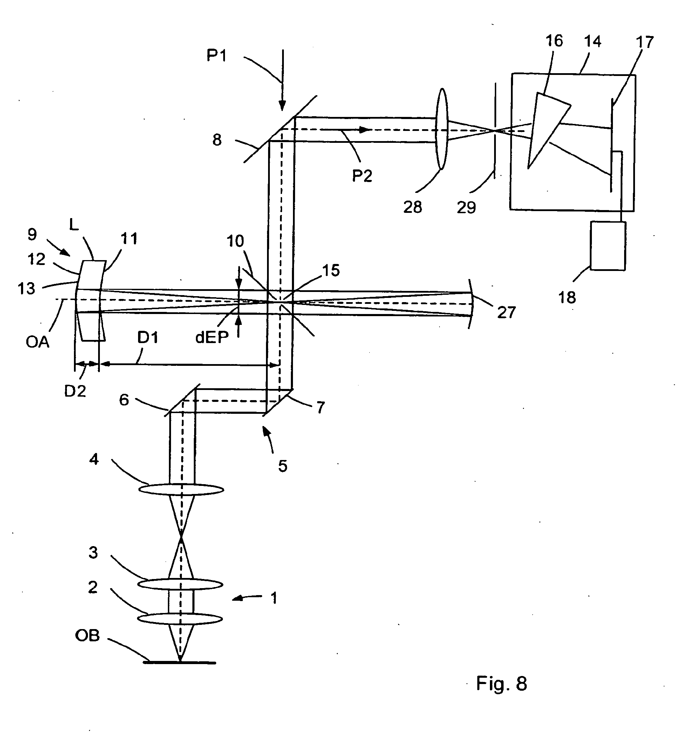

Das Farbmodul 9 kann jedoch auch zwischen dem Hauptteiler 8 und dem Scanner 5 angeordnet sein. In diesem Fall dient es nicht nur bei der Detektion zur konfokalen Abbildung unterschiedlicher Wellenlängen aus unterschiedlichen Objektschnittweiten, sondern bereits bei der Beleuchtung zur wellenlängenabhängigen Aufspaltung der Laserstrahlung mit mehreren Wellenlängen, so daß die entsprechende Wellenlänge auch nur in die entsprechende Objektschnittweite abgebildet bzw. fokussiert wird. Eine solche Ausbildung ist in Fig. 8 gezeigt, wobei gleiche Elemente wie in Fig. 1 mit gleichen Bezugszeichen bezeichnet sind und zu deren Beschreibung auf die obigen Ausführungen verwiesen wird.

Im Unterschied zu der Ausführungsform von Fig. 1 ist bei der Ausgestaltung von Fig. 8 der Umlenkspiegel 10 zwischen dem Scanner 5 und dem Hauptteiler 8 angeordnet sowie auf beiden Seiten verspiegelt. Ferner ist noch ein Kollimator 27 vorgesehen, der beispielsweise als Spiegel, Rückflächenspiegel auf einer Linse oder auch als refraktive Optik ausgebildet sein kann.

Im Betrieb wird Laserstrahlung mit unterschiedlicher Wellenlänge über den Hauptteiler 8 (wie durch den Pfeil P1 angedeutet ist) als paralleles Strahlenbündel zum Umlenkspiegel 10 geführt und von diesem (in Fig. 8 gesehen) nach rechts zum Kollimator 27 hin reflektiert. Der Kollimator 27 fokussiert das Parallelbündel so, daß es durch das Durchgangsloch 15 im Umlenkspiegel 10 läuft und dann als divergierendes Strahlenbündel auf die Einzellinse L trifft. Die Einzellinse L reflektiert das divergierende Strahlenbündel als paralleles Strahlenbündel zum Umlenkspiegel 10 hin und beaufschlagt es gleichzeitig mit dem eingestellten Farblängsfehler. Dieses Parallelbündel mit eingestelltem Farblängsfehler wird dann vom Umlenkspiegel 10 hin zum Scanner 5 reflektiert und mittels des Scanners 5, der Scanneroptik 4 und der Mikroskopoptik 1 auf bzw. in das zu untersuchende Objekt OB fokussiert und über das Objekt OB bewegt. Aufgrund der Einprägung des Farblängsfehlers mittels der Einzellinse werden die unterschiedlichen Wellenlängen dabei in die unterschiedlichen Objektschnittweiten fokussiert.

Die aufgrund der Wechselwirkung zwischen der fokussierten Laserstrahlung und dem Objekt der erzeugte Probenstrahlung durchläuft die Mikroskopoptik 1, die Scanneroptik 4 und den Scanner 5 und trifft dann als paralleles Strahlenbündel auf den Umlenkspiegel 10 und wird von diesem zur Einzellinse L hin reflektiert. Die Einzellinse L reflektiert das parallele Probenstrahlenbündel zum Umlenkspiegel 10 als konvergierendes Probenstrahlenbündel zurück, wobei aufgrund des Farblängsfehlers der Einzellinse L aus jeder Objektschnittweite immer nur die entsprechende Wellenlänge in das Durchgangsloch 15 fokussiert wird, so daß das fokussierte Probenstrahlenbündel nach Durchtritt durch das Durchgangsloch 15 farbfehlerfrei ist. Dieses Probenstrahlenbündel wird am Kollimator 27 reflektiert und in ein paralleles Strahlenbündel umgewandelt und dann über den Umlenkspiegel 10 und den Hauptteiler 8 zur Detektionseinheit 14 hin reflektiert. Zwischen der Detektionseinheit 14 und dem Hauptteiler 8 ist eine Detektionsoptik 28 und eine Konfokalblende 29 angeordnet, wobei die Detektionsoptik 28 das parallele Bündel farbfehlerfrei in die Durchgangsöffnung der konfokalen Blende 29 fokussiert. Die Detektionseinheit 14 detektiert dann in gleicher Weise wie bei der Ausführungsform von Fig. 1 die Intensität der konfokal abgebildeten Probenstrahlung wellenlängenabhängig.

In einer Abwandlung der Ausführungsform von Fig. 8 ist der Umlenkspiegel 10 um 90° gegenüber seiner jetzigen Position gedreht angeordnet, so daß die Laserstrahlung zur Beleuchtung, die durch den Hauptteiler 8 als Parallelbündel auf den Umlenkspiegel 10 trifft, zuerst zur Einzellinse L hin reflektiert wird, von dieser als konvergierendes Strahlenbündel zurückreflektiert wird, durch das Durchgangsloch 15 läuft, am Kollimator 27 reflektiert und als paralleles Strahlenbündel auf den Umlenkspiegel 10 gerichtet wird, und von diesem dann zum Scanner 5 hin reflektiert wird. In gleicher Weise durchläuft die Probenstrahlung den beschriebenen Strahlenweg in umgekehrter Reihenfolge, so daß die von dem Scanner 5 kommende Probenstrahlung am Umlenkspiegel 10 als Parallelenbündel zum Kollimator 27 hin reflektiert wird, von diesem als konvergierendes Probenstrahlenbündel zum Umlenkspiegel 10 hinreflektiert wird, das durch das Durchgangsloch 15 läuft und an der Einzellinse L reflektiert wird, farbkorrigiert wird und als Parallelenbündel zum Umlenkspiegel 10 zurückreflektiert wird, der das Parallelenbündel nach oben (in Fig. 8) zum Hauptteiler 8 hin reflektiert. Bei dieser Anordnung wird bevorzugt ein Kollimator 27 eingesetzt, der keinen Farbfehler aufweist, der also entweder besonders gut für die entsprechenden Wellenlängen korrigiert ist oder beispielsweise nur ein Spiegelelement umfaßt.

Ferner ist es möglich, bei der Ausführungsform von Fig. 1 für die Beleuchtung ein Farbmodul dem Hauptteiler 8 vorzuordnen, das dem Farbmodul 9 entspricht, so daß die Wellenlängen abhängige Aufspaltung der Laserstrahlung mit der unterschiedlichen Wellenlänge bereits vor dem Hauptteiler 8 durchgeführt ist. In diesem Fall werden die Farblängsfehler in beiden Farbmodulen bevorzugt gleich eingestellt.

Neben den bereits beschriebenen Möglichkeiten der konfokalen Beleuchtung ist es ferner möglich, das Objekt OB im Auflicht oder Durchlicht zu beleuchten und nur detektionsseitig das Mikroskop in der beschriebenen Art und Weise einzusetzen.

Bei den beschriebenen Ausführungsformen wird die Probenstrahlung stets am Hauptteiler 8 reflektiert, während die Laserstrahlung zur Beleuchtung transmittiert wird. Natürlich kann das Mikroskop auch so ausgebildet werden, daß die Probenstrahlung am Hauptteiler transmittiert wird und die Laserstrahlung zur Beleuchtung am Hauptteiler reflektiert wird.

**Patentansprüche**

1. Laser-Scanning-Mikroskop zur Messung des Oberflächenprofils eines Objekts (OB) bestehend aus einem Beleuchtungsmodul mit einer Laserlichtquelle die unterschiedliche Wellenlängen aufweist, das Beleuchtungsmodul lenkt die Beleuchtungsstrahlung (P1) der Laserlichtquelle mit unterschiedlichen Wellenlängen so auf verschiedene Oberflächenabschnitte des Objekts (OB), dass für jeden Abschnitt ein vorbestimmter Objektschnittweitenbereich beleuchtet wird, wobei aufgrund einer Wechselwirkung zwischen der Beleuchtungsstrahlung und dem Objekt (OB) Probenstrahlung (P2) erzeugt wird,

das Laser-Scanning-Mikroskop besteht ferner aus einem Scanner (5) zur Bewegung der Beleuchtungsstrahlung (P1) über eine Probe (OB),

einer Mikroskopoptik (1) zur Fokussierung der Beleuchtungsstrahlung (P1) auf die Probe (OB) sowie einem Detektionsstrahlengang zur wellenlängenabhängigen Detektion der über die Mikroskopoptik (1) und den Scanner (5) descannten Probenstrahlung (P2) mit einer Detektionseinheit (14) und einer Konfokalblende (29), wobei

im gemeinsamen Beleuchtungsstrahlengang und descannten Detektionsstrahlengang als Farbmodul (9) eine Linsenanordnung mit einem Farblängsfehler zur Detektion unterschiedlicher Wellenlängen aus unterschiedlichen Probenhöhen angeordnet ist, bei dem das Farbmodul (9) zumindest eine Linse (L) sowie einen gekrümmten Spiegel (13) aufweist, der den Detektionsstrahlengang so faltet, dass die Probenstrahlung (P2) die Linse (L) zweimal durchläuft, und wobei der Farblängsfehler des Farbmoduls (9) einstellbar ist, so dass durch Änderung des Farblängsfehlers die zu detektierenden Schnittweiten einstellbar sind.

2. Mikroskop nach Anspruch 1, bei dem die Probenstrahlung auf das Farbmodul (9) als paralleles Strahlenbündel trifft und von dem Farbmodul (9) in ein konvergierendes Strahlenbündel umgewandelt wird.

3. Mikroskop nach Anspruch 1 oder 2, bei dem der Spiegel (13) als Rückflächenspiegel auf einer Seite der Linse (L) ausgebildet ist.

4. Mikroskop einem der nach Anspruch 1-3, bei dem das Farbmodul (9) die Linse (L) als einzige Linse und den Spiegel (13) als einzigen Spiegel aufweist.

5. Mikroskop nach einem der Ansprüche 1 bis 4, bei dem beide Seiten (11, 12) der Linse (L) als sphärische Flächen ausgebildet sind.

6. Mikroskop nach einem der Ansprüche 1 bis 5, bei dem die Probenstrahlung derart auf das Farbmodul (9) fällt, daß der Hauptstrahl der Probenstrahlung mit der optischen Achse (OA) des Farbmoduls (9) zusammenfällt.

7. Mikroskop nach einem der Ansprüche 1 bis 6, bei dem dem Farbmodul (9) im Detektionsstrahlengang ein Umlenkspiegel (10) vorgeordnet ist, wobei die Probenstrahlung als paralleles Strahlenbündel am Umlenkspiegel zum Farbmodul (9) hin umgelenkt wird, das Farbmodul (9) durchläuft und vom Farbmodul (9) als konvergierendes Strahlenbündel kommend durch das Durchgangsloch (15) hindurchläuft.

8. Mikroskop nach Anspruch 7 bei dem dem Umlenkspiegel (10) ein Kollimator (27) nachgeordnet ist, der das durch das Durchgangsloch (15) hindurchlaufende Probenstrahlenbündel als Parallelbündel zum Umlenkspiegel (10), der auf seinen beiden Seiten verspiegelt ist, zurückreflektiert, wobei der Umlenkspiegel das Parallelbündel zum nächsten optischen Element im Detektionsstrahlengang reflektiert.

9. Mikroskop nach einem der Ansprüche 1 bis 8 bei dem im Detektionsstrahlengang ein Hauptteiler (8) angeordnet ist, über den die Beleuchtungsstrahlung zum Objekt (OB) geführt wird und die Probenstrahlung im Detektionsstrahlengang geführt wird, wobei das Farbmodul (9) zwischen Hauptteiler (8) und Scanner (5) angeordnet ist.

10. Mikroskop nach einem der obigen Ansprüche, bei dem das Farbmodul (9) eine erste und eine zweite austauschbare Farboptik mit unterschiedlichem Farblängsfehler aufweist, so daß durch Austausch der Farboptiken der Farblängsfehler veränderbar ist.

11. Mikroskop nach einem der obigen Ansprüche, bei dem das Farbmodul (9) den Spiegel (23, 27) sowie zwei oder drei Linsen (20, 21, 24, 25, 26) umfaßt und die Linsen (20, 21, 24, 25, 26) sowie der Spiegel (23, 27) entlang der optischen Achse (OA) des Farbmoduls (9) verschiebbar sind, so daß ein gewünschter Farblängsfehler des Farbmoduls (9) einstellbar ist.

12. Mikroskop nach Anspruch 11 bei dem alle Linsen (20, 21, 24, 25, 26) aus dem gleichen Material hergestellt sind.

13. Mikroskop nach einem der obigen Ansprüche, bei dem das Beleuchtungsmodul eine konfokale Beleuchtung, eine Auflicht-Hellfeld-Beleuchtung oder eine Durchlicht-Hellfeld-Beleuchtung des Objekts (OB) verwirklicht.

14. Mikroskopierverfahren mit einem Laser-Scanning-Mikroslop nach Anspruch 1 zur Messung des Oberflächenprofils eines Objekts % (0B) bei dem Beleuchtungsstrahlung (P1) mit unterschiedlichen Wellenlängen so auf verschiedene Oberflächenabschnitte des Objektes gelenkt wird, daß für jeden Abschnitt ein vorbestimmter Objektschnittweitenbereich beleuchtet wird, wobei aufgrund einer Wechselwirkung zwischen der Beleuchtungsstrahlung und dem Objekt (OB) Probenstrahlung (P2) erzeugt wird, indem Laserstrahlung unterschiedlicher Wellenlänge über einen Scanner (5) und eine Mikroskopoptik (1) auf eine Probe (OB) fokussiert und über diese bewegt wird
und über die Mikroskopoptik (1) und den Scanner (3) eine descannte Detektion in einer wellenlängenabhängig detektierenden, konsokalen Detektionseinheit in einem Detektionsstrahlengang erfolgt,
wobei mittels einer Linsenanordnung mit einem Farblängsfehler im gemeinsamen Beleuchtungsstrahlengang und descannten Detektionsstrahlengang ein Farblängsfehler erzeugt wird, der wellenlängenabhängig detektiert wird, wobei der Farblängsfehler einstellbar ist.

**Claims**

1. Laser scanning microscope for measuring the surface profile of an object (OB), consisting of an illumination module having a laser light source having different wavelengths, the illumination module directs the illumination radiation (P1) from the laser light source having different wavelengths onto different surface sections of the object (OB) in a manner such that for each section a predetermined object vertex focal length region is illuminated, wherein due to an interaction between the illumination radiation and the object (OB) sample radiation (P2) is produced,
the laser scanning microscope further consists of a scanner (5) for moving the illumination radiation (P1) over a sample (OB),
a microscopy optical means (1) for focusing the illumination radiation (P1) onto the sample (OB) and a detection beam path for the wavelength-dependent detection of the sample radiation (P2), which is descanned using the microscope optical means (1) and the scanner (5), using a detection unit (14) and a confocal aperture (29), wherein in the common illumination beam path and descanned detection beam path a lens arrangement having an axial chromatic aberration for detecting different wavelengths from different sample heights is arranged as a colour module (9), in which the colour module (9) has at least one lens (L) and one curved mirror (13) which folds the detection beam path such that the sample radiation (P2) passes through the lens (L) twice, and wherein the axial chromatic aberration of the colour module (9) is adjustable, with the result that the vertex focal lengths to be detected are adjustable by way of changing the axial chromatic aberration.

2. Microscope according to Claim 1, in which the sample radiation strikes the colour module (9) as a parallel bundle of rays and is converted by the colour module (9) into a convergent bundle of rays.

3. Microscope according to Claim 1 or 2, in which the mirror (13) is configured as a back-surface mirror on one side of the lens (L).

4. Microscope according to one of Claims 1-3, in which the colour module (9) has the lens (L) as the only lens and the mirror (13) as the only mirror.

5. Microscope according to one of Claims 1-4, in which both sides (11, 12) of the lens (L) are configured as spherical areas.

6. Microscope according to one of Claims 1-5, in which the sample radiation strikes the colour module (9) such that the chief ray of the sample radiation coincides with the optical axis (OA) of the colour module (9).

7. Microscope according to one of Claims 1-6, in which a deflection mirror (10) is arranged upstream of the colour module (9) in the detection beam path, wherein the sample radiation is deflected as a parallel bundle of rays at the deflection mirror toward the colour module (9), passes through the colour module (9), and, coming from the colour module (9) as a convergent bundle of rays, passes through the through-hole (15).

8. Microscope according to Claim 7, in which a collimator (27) is arranged downstream of the deflection mirror (10), which collimator (27) reflects back the sample bundle of rays passing through the through-hole (15) as a parallel bundle of rays toward the deflection mirror (10), which is reflectively coated on both sides, wherein the deflection mirror reflects the parallel bundle of rays toward the next optical element in the detection beam path.

9. Microscope according to one of Claims 1-8, in which a main splitter (8) is arranged in the detection beam path, using which main splitter the illumination radiation is guided to the object (OB) and the sample radiation is guided in the detection beam path, wherein the colour module (9) is arranged between main splitter (8) and scanner (5).

10. Microscope according to one of the preceding claims, in which the colour module (9) has a first and a second interchangeable colour optical means with different axial chromatic aberration, with the result that the axial chromatic aberration is changeable by way of interchanging the colour optical means.

11. Microscope according to one of the preceding claims, in which the colour module (9) comprises the mirror (23, 27) and two or three lenses (20, 21, 24, 25, 26) and the lenses (20, 21, 24, 25, 26) and the mirror (23, 27) are displaceable along the optical axis (OA) of the colour module (9), with the result that a desired axial chromatic aberration of the colour module (9) is adjustable.

**12.** Microscope according to Claim 11, in which all lenses (20, 21, 24, 25, 26) are made from the same material.

**13.** Microscope according to one of the preceding claims, in which the illumination module realizes confocal illumination, reflected light bright field illumination or transmitted light bright field illumination of the object (OB).

**14.** Microscopy method with a laser scanning microscope according to Claim 1 for measuring the surface profile of an object (OB), in which the illumination radiation (P1) with different wavelengths is directed onto different surface sections of the object in a manner such that for each section a predetermined object vertex focal length region is illuminated, wherein due to an interaction between the illumination radiation and the object (OB) sample radiation (P2) is produced by laser radiation of different wavelength being focused onto, and moved over, a sample (OB) via a scanner (5) and a microscope optical means (1),
and descanned detection is carried out in a wavelength-dependently detecting, confocal detection unit in a detection beam path via the microscopy optical means (1) and the scanner (5),
wherein an axial chromatic aberration, which is detected in a wavelength-dependent manner, is produced using a lens arrangement having an axial chromatic aberration in the common illumination beam path and descanned detection beam path, wherein the axial chromatic aberration is adjustable.

**Revendications**

**1.** Microscope à balayage laser pour la mesure du profil de surface d'un objet (OB),
comprenant un module d'éclairement comportant une source de lumière laser présentant différentes longueurs d'onde, le module d'éclairement dirigeant le rayonnement d'éclairement (P1) de la source de lumière laser présentant différentes longueurs d'onde sur différentes parties de surface de l'objet (OB) de telle manière que pour chaque partie, une plage prédéterminée de distances focales arrières d'objet soit éclairée, dans lequel un rayonnement échantillon (P2) est généré par interaction entre le rayonnement d'éclairement et l'objet (OB),
le microscope à balayage laser comprenant en outre un dispositif de balayage (5) destiné à déplacer le rayonnement d'éclairement (P1) sur un échantillon (OB), une optique de microscope (1) destinée à focaliser le rayonnement d'éclairement (P1) sur l'échantillon (OB) ainsi qu'un trajet de faisceau de détection destiné à détecter en fonction de la longueur d'onde le rayonnement échantillon à balayage compensé (P2) par l'intermédiaire de l'optique de microscope (1) et du dispositif de balayage (5), au moyen d'une unité de détection (14) et d'une ouverture (29) confocale, dans lequel
un système de lentilles ayant une aberration chromatique longitudinale et destiné à détecter différentes longueurs d'onde provenant de différentes hauteurs d'échantillon est disposé en tant que module de couleur (9) dans le trajet du faisceau d'éclairement commun et le trajet du faisceau de détection à balayage compensé, dans lequel le module de couleur (9) comprend au moins une lentille (L) ainsi qu'un miroir incurvé (13) qui replie le trajet du faisceau de détection de telle sorte que le rayonnement échantillon (P2) passe deux fois à travers la lentille (L), et dans lequel l'aberration chromatique longitudinale du module de couleur (9) est réglable de telle manière que les distances focales arrières à détecter soient réglables par modification de l'aberration chromatique longitudinale.

**2.** Microscope selon la revendication 1, dans lequel le rayonnement échantillon est incident sur le module de couleur (9) sous la forme d'un faisceau parallèle et est converti en un faisceau convergent par le module de couleur (9).

**3.** Microscope selon la revendication 1 ou 2, dans lequel le miroir (13) est réalisé sous la forme d'un miroir de surface arrière sur une face de la lentille (L).

**4.** Microscope selon l'une quelconque des revendications 1 à 3, dans lequel le module de couleur (9) comprend la lentille (L) en tant que lentille unique et le miroir (13) en tant que miroir unique.

**5.** Microscope selon l'une quelconque des revendications 1 à 4, dans lequel les deux faces (11, 12) de la lentille (L) sont réalisées sous la forme de surfaces sphériques.

**6.** Microscope selon l'une quelconque des revendications 1 à 5, dans lequel le rayonnement échantillon est incident sur le module de couleur (9) de telle manière que le rayon principal du rayonnement échantillon coïncide avec l'axe optique (OA) du module de couleur (9).

**7.** Microscope selon l'une quelconque des revendications 1 à 6, dans lequel un miroir de déviation (10) est disposé en amont du module de couleur (9) sur le trajet du faisceau de détection, dans lequel le rayonnement échantillon est dévié en un faisceau parallèle sur le miroir de déviation vers le module de couleur (9), passe à travers le module de couleur (9) et passe à travers le trou traversant (15) en émergeant du module de couleur (9) sous la forme d'un faisceau convergent.

8. Microscope selon la revendication 7, dans lequel, en aval du miroir de déviation (10), est disposé un collimateur (27) qui renvoie vers le miroir de déviation (10), qui est réfléchissant sur ses deux faces, le faisceau échantillon ayant passé à travers le trou traversant (15) sous la forme d'un faisceau parallèle, le miroir de déviation réfléchissant le faisceau parallèle vers l'élément optique suivant sur le trajet du faisceau de détection.

9. Microscope selon l'une quelconque des revendications 1 à 8, dans lequel, sur le trajet du faisceau de détection, est disposée une séparatrice principale (8) par l'intermédiaire de laquelle le rayonnement d'éclairement est guidé vers l'objet (OB) et le rayonnement échantillon est guidé sur le trajet du faisceau de détection, dans lequel le module de couleur (9) est disposé entre la séparatrice principale (8) et le dispositif de balayage (5).

10. Microscope selon l'une quelconque des revendications précédentes, dans lequel le module de couleur (9) comprend des première et seconde optiques colorées interchangeables présentant des aberrations chromatiques longitudinales différentes de telle sorte que l'erreur chromatique longitudinale puisse être modifiée par échange des optiques colorées.

11. Microscope selon l'une quelconque des revendications précédentes, dans lequel le module de couleur (9) comprend le miroir (23, 27) ainsi que deux ou trois lentilles (20, 21, 24, 25, 26) et les lentilles (20, 21, 24, 25, 26) ainsi que le miroir (23, 27) peuvent être déplacés le long de l'axe optique (OA) du module de couleur (9) de telle sorte qu'une aberration chromatique longitudinale souhaitée du module de couleur (9) puisse être réglée.

12. Microscope selon la revendication 11, dans lequel toutes les lentilles (20, 21, 24, 25, 26) sont fabriquées à partir du même matériau.

13. Microscope selon l'une quelconque des revendications précédentes, dans lequel le module d'éclairement réalise un éclairement confocal, un éclairement à fond clair en lumière réfléchie ou un éclairement à fond clair en lumière transmise de l'objet (OB).

14. Procédé de microscopie au moyen d'un microscope à balayage laser selon la revendication 1, destiné à mesurer le profil de surface d'un objet (OB), dans lequel un rayonnement d'éclairement (P1) présentant différentes longueurs d'onde est dirigé vers différentes parties de surface de l'objet de telle manière que pour chaque partie, une plage prédéterminée de distances focales arrières d'objet soit éclairée, dans lequel un rayonnement échantillon (P2) est généré par interaction entre le rayonnement d'éclairement et l'objet (OB) par le fait qu'un rayonnement laser de différentes longueurs d'onde est focalisé sur un échantillon (OB) par l'intermédiaire d'un dispositif de balayage (5) et d'une optique de microscope (1) et est déplacé sur celui-ci,
et une détection à balayage compensé s'effectue sur un trajet du faisceau de détection par l'intermédiaire de l'optique de microscope (1) et du dispositif de balayage (5) dans une unité de détection confocale effectuant la détection en fonction de la longueur d'onde,
dans lequel une erreur chromatique longitudinale est générée au moyen d'un système de lentilles présentant, sur un trajet de faisceau d'éclairement commun et un trajet de faisceau de détection à balayage compensé, une aberration chromatique longitudinale qui est détectée en fonction de la longueur d'onde, l'aberration chromatique longitudinale pouvant être réglée.

Fig. 1

Fig. 2

Fig. 3

Fig.4

Fig. 5

Fig.6

Fig.7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4419940 A1